# EUROPÄISCHE PATENTSCHRIFT

(11) **EP 0 403 001 B1**
(45) Veröffentlichungstag und Bekanntmachung des Hinweises auf die Patenterteilung: **30.08.1995**
(21) Anmeldenummer: 90201484.4
(22) Anmeldetag: 08.06.1990
(51) Int. Cl.: G11B 5/55, G11B 5/11, G11B 5/48

(54) **Magnetbandgerät mit einem Magnetkopf**
Magnetic tape apparatus with a magnetic head
Appareil à bande magnétique comportant une tête magnétique

(30) Priorität: 14.06.1989 AT 1452/89
(43) Veröffentlichungstag der Anmeldung: 19.12.1990
(73) Patentinhaber: Philips Electronics N.V., 5621 BA Eindhoven (NL)
(72) Erfinder: Gleissner, Josef, NL-5656 AA Eindhoven (NL); Veigl, Johann, NL-5656 AA Eindhoven (NL)
(74) Vertreter: Cuppens, Hubertus Martinus Maria

(56) Entgegenhaltungen:
- EP-A- 0 120 518
- DE-A- 3 637 183
- US-A- 4 356 524
- PATENT ABSTRACTS OF JAPAN, Band 9, Nr. 262 (P-398)[1985], 19. Oktober 1985;& JP-A-60 111 305 (TDK K.K.) 17-06-1985
- PATENT ABSTRACTS OF JAPAN, Band 7, Nr. 125 (P-200)[1270], 31. Mai 1983;& JP-A-58 041 411 (MITSUBISHI DENKI K.K.) 10-05-1983

## Beschreibung

Die Erfindung bezieht sich auf ein Magnetbandgerät mit einem Magnetkopf, der im wesentlichen um 180° zwischen zwei Abtastpositionen wendbar ist, mit einem den Magnetkopf tragenden, mittels einer Lagereinrichtung verdrehbar gelagerten Kopfträger, der zum Wenden des Magnetkopfes zwischen zwei Betriebslagen verdrehbar ist und der einen zu dem Magnetkopf führenden Kanal aufweist, durch den hindurch im wesentlichen ungeschirmte Abschnitte von mit Anschlüssen des Magnetkopfes elektrisch verbundenen Leitungen eines außerhalb des Kanals mit einer Abschirmung abgeschirmten Kabels zu dem Magnetkopf hindurchgeführt sind, und der elektrisch leitend ausgebildet ist und elektrisch mit einem geräteseitigen Bezugspotentialanschluß verbunden ist.

Ein solches im Handel erhältliches bekanntes Gerät weist zum Zuführen und Abführen von elektrischen Signalen zu dem beziehungsweise von dem Magnetkopf ein gegen elektromagnetische Störstrahlungen mit einer Abschirmung abgeschirmtes Kabel auf, wobei die Abschirmung, die eine relativ hohe Steifigkeit und einen relativ hohen Torsionswiderstand aufweist, zur Gewährleistung einer erforderlichen leichtgängigen Verdrehbarkeit des Kopfträgers im Bereich des durch den Kopfträger hindurchgehenden Kanals von dem Kabel entfernt ist, so daß die durch dem Kanal hindurchgehenden Abschnitte der Leitungen des Kabels an sich gegen Störstrahlungen ungeschirmt sind. Da aber der Kopfträger elektrisch leitend ausgebildet und mit einem geräteseitigen Bezugspotentialanschluß elektrisch verbunden ist, sind auch diese Abschnitte der Leitungen gegen elektromagnetische Störstrahlungen abgeschirmt. Bei dem bekannten Gerät besteht der Kopfträger im wesentlichen aus einem Basisteil aus Aluminium, an dem der Magnetkopf befestigt ist, und aus einem mit dem Basisteil mittels Schrauben verbundenen Lagerrohr aus Stahl, mit dem der Kopfträger in einer geräteseitigen Lagereinrichtung verdrehbar gelagert ist, wobei die Leitungen durch das Lagerrohr und eine Bohrung im Basisteil hindurch, die gemeinsam den zum Hindurchführen von Leitungen vorgesehenen Kanal bilden, zu dem Magnetkopf hingeführt sind. Ein solcher elektrisch leitend ausgebildeter Kopfträger weist eine komplizierte mehrteilige Ausbildung auf und seine Herstellung ist aufwendig und teuer.

EP-A-0.120.518 beschreibt einen Kopfträger, der aus Kohlefaserverstärktem Nylon (Polyamid) gebildet ist. Üblicherweise sind die in einem solchen kohlefaserverstärkten Polyamid enthaltenen Kohlfasern, die für sich elektrisch leitend sind, vollkommen in dem Polyamid eingebettet, und zwar um die Festigkeit des Kunststoffes, also folglich des Kopfträgers zu erhöhen. Wenn aber die Kohlefasern vollkommen in Kunststoff eingebettet sind, bedeutet dies, daß der Kopfträger nicht aus elektrisch leitendem Kunststoff besteht, weil der die Kohlefasern vollkommen umschließende Kunststoff elektrisch nichtleitend ist.

Aus JP-A-60.111.305 ist es bekannt das Gehäuse eines Magnetkopfes aus einem elektrisch leitenden Kunststoff auszubilden. Diese Maßnahme ist vorgesehen, um elektrostatische Aufladungen des Magnetkopfes, die beim Zusammenwirken mit dem Magnetband entstehen können, zu vermeiden.

Die Erfindung hat sich zur Aufgabe gestellt, die vorstehend angeführten Schwierigkeiten zu vermeiden und bei einem Gerät der eingangs angeführten Gattung einen elektrisch leitend ausgebildeten Kopfträger zu schaffen, der eine möglichst einfache Ausbilding aufweist und der einfach und preiswert herstellbar ist. Hierfür ist die Erfindung dadurch gekennzeichnet, daß der Kopfträger aus elektrisch leitendem Kunststoff besteht. Hierdurch ist vorteilhafterweise erreicht, daß der elektrisch leitend ausgebildete Kopfträger als einstückiger Teil beispielsweise in einem einzigen Spritzgußvorgang mit hoher Genauigkeit hergestellt werden kann, wodurch eine möglichst einfache Ausbildung und eine besonders einfache und preisgünstige Herstellung des Kopfträgers erreicht ist, wobei aufgrund seiner elektrisch leitenden Ausbildung und seiner elektrischen Verbindung mit einem geräteseitigen Bezugspotentialanschluß auch eine Abschirmung gegen elektromagnetische Störstrahlungen für die durch seinen Kanal ungeschirmt hindurchgeführten Leitungsabschnitte erzielt wird.

Als elektrisch leitende Kunststoffe bietet der bekannte Stand der Technik auf diesem Gebiet verschiedene Möglichkeiten. Als besonders vorteilhaft hat sich aber erwiesen, wenn der Kopfträger aus kohlefaserverstärktem Polyamid besteht. Hierdurch wird ein einfach herstellbarer und billiger elektrisch leitend ausgebildeter Kopfträger erhalten, der zusätzlich unter Ausnützung der Eigenschaften von Polyamid einen geringen Verschleiß und eine hohe Dauerstandfestigkeit aufweist.

Der aus elektrisch leitendem Kunststoff bestehende Kopfträger kann beispielsweise über eine gegen ihn drückende separate Kontaktfeder mit einem geräteseitigen Bezugspotentialanschluß elektrisch verbunden sein. Als vorteilhaft hat sich aber erwiesen, wenn der Kopfträger mit einer durch den Kanal zu dem Magnetkopf hindurchgeführten, mit einem geräteseitigen Bezugspotentialanschluß elektrisch verbundenen Bezugspotentialleitung des Kabels elektrisch verbunden ist. Auf diese Weise wird eine ohnehin vorhandene, zum Magnetkopf hingeführte Bezugspotentialleitung des Kabels zusätzlich zum elektrischen Verbinden des aus elektrisch leitendem Kunststoff bestehenden Kopfträgers mit einem geräteseitigen Bezugspotentialanschluß ausgenützt.

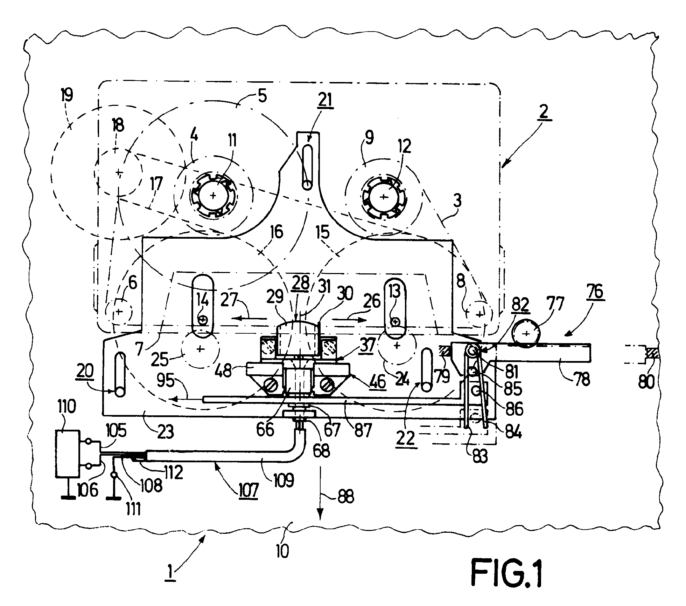

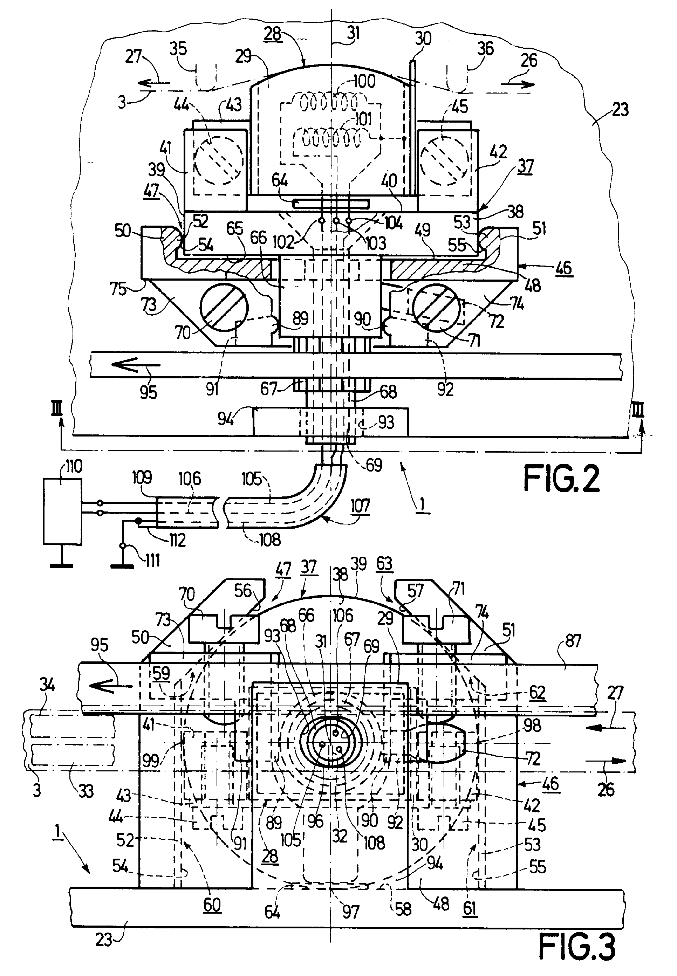

Die Erfindung wird im folgenden anhand eines Ausführungsbeispieles näher beschrieben, auf das die Erfindung jedoch nicht beschränkt sein soll. Die Fig.1 zeigt schematisch in Draufsicht einen für die Erfindung wesentlichen Teil eines Magnetbandgerätes, mit dem ein in entgegengesetzten Bandlaufrichtungen antreibbares Magnetband abtastbar ist und das zum Abtasten des Magnetbandes einen auf einem verdrehbaren Kopfträger angebrachten, um 180° zwischen zwei Abtastpositionen wendbaren Magnetkopf zum Aufzeichnen und Wiedergeben aufweist. Die Fig.2 zeigt in einem gegenüber der Fig.1 größeren Maßstab in Draufsicht ein Detail des Gerätes gemäß Fig.1 mit dem wendbaren Magnetkopf, der von dem verdrehbaren Kopfträger getragen ist, der mittels einer Lagereinrichtung des Gerätes drehbar gelagert ist. Die Fig.3 zeigt das Detail gemäß Fig.2 in einem Schnitt gemäß der Linie III-III in Fig.2.

Die Fig.1 zeigt einen Teil eines Magnetbandgerätes 1, in das eine in Fig.1 schematisch mit strichpunktierten Linien dargestellte Kassette 2 einsetzbar ist. Hiefür weist das Gerät 1 beispielsweise eine nicht dargestellte wannenförmige Kassettenaufnahme auf. In der Kassette 2 ist ein Magnetband 3 untergebracht. Das Magnetband 3 ist von einem ersten Wickelkern 4, auf den im dargestellten Zustand das Magnetband 3 zu einem Bandwickel 5 aufgewickelt ist, über eine Bandführung 6 und längs einer langen Kassettenschmalseite 7 und über eine weitere Bandführung 8 zu einem zweiten Wickelkern 9 geführt.

Das Magnetbandgerät 1 weist ein im wesentlichen plattenförmiges Chassis 10 auf. Auf dem Chassis 10 ist ein erster rotierend antreibbarer Wickeldorn 11 zum rotierenden Antreiben des ersten Wickelkernes 4 und ein zweiter rotierend antreibbarer Wickeldorn 12 zum rotierenden Antreiben des zweiten Wickelkernes 9 drehbar gelagert. Weiters sind auf dem Chassis 10 eine erste Bandantriebswelle 13 und eine zweite Bandantriebswelle 14 drehbar gelagert. Jede der beiden Bandantriebswellen 13 und 14 ist mit einer von zwei Schwungscheiben 15 und 16 drehfest verbunden. Um einen Teil der Umfangsflächen der beiden Schwungscheiben 15 und 16 ist in entgegen gesetztem Windungssinn eine Pese 17 herumgeschlungen, die über ein Pesenrad 18 geführt ist. Das Pesenrad 18 ist von einem auf dem Chassis 10 befestigten Motor 19 mit konstanter Drehzahl gemäß Fig.1 entgegen dem Uhrzeigersinn antreibbar. Der zweite Wickeldorn 12 ist von der ersten Bandantriebswelle 13 her und der erste Wickeldorn 11 ist von der zweiten Bandantriebswelle 14 her antreibbar, dies in bekannter Weise über je ein wahlweise einschaltbares Zwischengetriebe, das beispielsweise aus mehreren Getrieberädern besteht und eine Rutschkupplung zum Ausgleich von Drehzahlunterschieden aufweist.

Weiters weist das Gerät 1 eine auf dem Chassis 10 mit drei Stift-Schlitz-Verbindungen 20, 21 und 22 senkrecht zur langen Kassettenschmalseite 7 verschiebbar geführte Trägerplatte 23 auf. Auf der Trägerplatte 23 sind eine erste und eine zweite je mit strichpunktierten Linien angedeutete, über nicht dargestellte Lagerhebel auf der Trägerplatte 23 verschwenkbar gelagerte Andruckrollen 24 und 25 vorgesehen, von denen wahlweise jeweils eine mit einer der beiden Bandantriebswellen 13 und 14 federnd in Anlage bringbar ist, wobei zwischen der betreffenden Bandantriebswelle und der betreffenden Andruckrolle sich das Magnetband 3 befindet. Auf diese Weise ist das Magnetband 3 über eine rotierend angetriebene Bandantriebswelle, gegen die das Magnetband mit der zugehörigen Andruckrolle angedrückt wird, mit konstanter Bandgeschwindigkeit antreibbar. In einer Betriebsart "Normaler Vorlauf" wird die erste Andruckrolle 24 gegen die erste Bandantriebswelle 13 gedrückt, wie dies in Fig.1 dargestellt ist. Dabei wird die erste Bandantriebswelle 13 vom Motor 19 her gemäß Fig.1 entgegen dem Uhrzeigersinn mit konstanter Drehzahl angetrieben, so daß folglich das Magnetband 3 in der mit einem Pfeil 26 bezeichneten Bandlaufrichtung angetrieben wird. Hiebei wird das Magnetband 3 auf den vom zweiten Wickeldorn 12 angetriebenen zweiten Wickelkern 9 aufgewickelt. In einer Betriebsart "Normaler Rücklauf", auch "Reverselauf" genannt, wird die zweite Andruckrolle 25 gegen die zweite Bandantriebswelle 14 gedrückt, wobei die zweite Bandantriebswelle 14 vom Motor 19 her gemäß Fig.1 im Uhrzeigersinn angetrieben wird, so daß folglich das Magnetband 3 in der mit einem Pfeil 27 bezeichneten Bandlaufrichtung angetrieben wird. Hiebei wird dann das Magnetband 3 auf den vom ersten Wickeldorn 11 angetriebenen ersten Wickelkern 4 aufgewickelt.

Auf der Trägerplatte 23 des Magnetbandgerätes 1 ist weiters ein zum Aufzeichnen und Wiedergeben von Informationssignalen, beispielsweise Tonsignalen, ausgebildeter Magnetkopf 28 angebracht, mit dessen aus Mumetall bestehendem Gehäuse 29 seitlich eine gabelförmige Bandführung 30 verbunden ist. Der Magnetkopf 28 ist um eine senkrecht zur langen Kassettenschmalseite 7 verlaufende Wendeachse 31 um 180° zwischen zwei Abtastpositionen wendbar, von denen eine in den Figuren 1 bis 3 dargestellt ist. Jede Abtastposition ist einer von den beiden entgegengesetzten Bandlaufrichtungen 26 und 27 zugeordnet. In jeder Abtastposition tastet der Magnetkopf 28 mittels zweier in Fig.3 schematisch angedeuteter, nebeneinanderliegender Arbeitsspalte 32, die bezüglich der Wendeachse 31 des Magnetkopfes 28 exzentrisch liegen und je einem Magnetsystem des Magnetkopfes 28 angehören, einen Spurbereich des Magnetbandes 3 ab. In Fig.3 sind die beiden Spurbereiche des Magnetbandes 3 mit den Bezugszeichen 33 und 34 bezeichnet. Gemäß den Figuren 2 und 3 wird das Magnetband 3 in der Bandlaufrichtung 26 angetrieben und dementsprechend nimmt der Magnetkopf 28 jene Abtastposition ein, in der er mittels seiner beiden Arbeitsspalte 32 den Spurbereich 33 abtastet. Wenn das Magnetband 3 in der entgegengesetzten Bandlaufrichtung 27 angetrieben wird, dann nimmt der Magnetkopf 28 die gewendete andere Abtastposition ein, in der er dann mittels seiner beiden Arbeitsspalte 32 den anderen Spurbereich 34 abtastet. Im vorliegenden Falle einer stereophonen Aufzeichnung beziehungsweise Wiedergabe tastet der Magnetkopf 28 mittels seiner beiden Arbeitsspalte 32 je Spurbereich 33 bzw. 34 zwei im betreffenden Spurbereich nebeneinanderliegende Spuren ab. Es sei erwähnt, daß im Falle einer monophonen Aufzeichnung beziehungsweise Wiedergabe der Magnetkopf 28 nur einen Arbeitsspalt aufweist und je Spurbereich 33 bzw. 34 tatsächlich nur eine einzige Spur mit diesem Arbeitsspalt abtastet. In Fig.2 sind zwei kassettenseitige Bandführungen 35 und 36 mit strichpunktierten Linien angedeutet, die für die nötige Umschlingung des Magnetkopfes 28 durch das Magnetband 3 sorgen.

Der Magnetkopf 28 wird von einem um die Wendeachse 31 verdrehbaren Kopfträger 37 getragen, der elektrisch leitend ausgebildet ist. In vorliegendem Fall besteht der Kopfträger 37 aus elektrisch leitendem, in einem Spritzgußverfahren verarbeitbaren Kunststoff. Dieser Kunststoff ist hiebei durch ein kohlefaserverstärktes Polyamid gebildet. Ein solcher elektrisch leitend ausgebildeter Kopfträger ist einfach und billig als einstückiger Teil in einem Spritzgußvorgang mit hoher Genauigkeit herstellbar. Durch die Verwendung von kohlefaserverstärktem Polyamid ist weiters vorteilhafterweise erreicht, daß der Kopfträger einen geringen Verschleiß und eine hohe Dauerstandfestigkeit aufweist. Der Kopfträger könnte auch aus einem anderen elektrisch leitenden Kunststoff bestehen, beispielsweise aus leitrußgefülltem Polyamid oder aus kohlefaserverstärktem ABS-Copolymer. Es könnte auch ein in einem Preßvorgang verarbeitbarer elektrisch leitender Kunststoff verwendet werden.

Der Kopfträger 37 weist eine zylindrische Trägerscheibe 38 auf, die eine äußere zylindrische Lagerfläche 39 aufweist. Von einer Seitenfläche 40 der Trägerscheibe 38 stehen zwei mit der Trägerscheibe 38 einstückig verbundene blockförmige Fortsätze 41 und 42 in Richtung der Wendeachse 31 ab. An diesen beiden Fortsätzen 41 und 42 ist eine Platte 43 aus Stahl mit Hilfe von zwei Schrauben 44 und 45 aus Metall befestigt. An der Stahlplatte 43 ist der Magnetkopf 28 befestigt, und zwar durch Verschweißen der Stahlplatte 43 und des Gehäuses 29 des Magnetkopfes 28 aus Mumetall. Auf diese Weise ist der Magnetkopf 28 mit dem Kopfträger 37 mechanisch verbunden, wobei das Gehäuse 29 des Magentkopfes 28 mit dem Kopfträger 37 auch elektrische verbunden ist.

Das Magnetbandgerät 1 weist auf der Trägerplatte 23 eine Lagereinrichtung 46 mit einer Lageröffnung 47 zur drehbaren Lagerung des Kopfträgers 37 auf. Die Lagereinrichtung 46 besteht dabei zum Teil aus der Trägerplatte 23 selbst und aus einem mit der Trägerplatte 23 verbundenen, im wesentlichen scheibenförmigen Lagerteil 48. Der Lagerteil 48 ist im Bereich seiner dem Magnetkopf 28 zugewandten Seitenfläche 49 mit zwei spiegelbildlich zueinander angeordneten Lagerleisten 50 und 51 versehen, die in ihrem von der Trägerplatte 23 abgewandten Bereich zueinander hin abgewinkelt ausgebildet sind. In ihrem senkrecht zur Trägerplatte 23 verlaufenden Bereich weisen die beiden Lagerleisten 50 und 51 je eine geradlinig verlaufende, im Querschnitt etwa halbkreisförmig abgerundete Lagerrippe 52 bzw. 53 auf, deren halbkreisförmige Begrenzungswände 54 und 55 je eine senkrecht zu den beiden Bandlaufrichtungen 26 und 27 verlaufende Begrenzungswand der Lageröffnung 47 bilden, in der die Trägerscheibe 38 drehbar gelagert ist. Zwei weitere Begrenzungswände 56 und 57 der Lageröffnung 47 sind an den zueinander hin abgewinkelt ausgebildeten Bereichen der Lagerleisten 50 und 51 vorgesehen. Eine weitere Begrenzungswand 58 der Lageröffnung 47 ist durch einen Teil der dem Magnetkopf 28 zugewandten Wand der Trägerplatte 23 gebildet. Diese Begrenzungswand 58 der Lageröffnung 47 verläuft in Richtung der beiden Bandlaufrichtungen 26 und 27. In der durch die vorerwähnten Begrenzungswände 54, 55, 56, 57 und 58 begrenzten Lageröffnung 47 ist der Kopfträger 37 mit dessen Trägerscheibe 38 mit Spiel drehbar gelagert. Diese Spiel beträgt in der Praxis etwa ein Zehntelmillimeter. Wie aus Fig.3 ersichtlich ist, ist die Lagereinrichtung 46 im Bereich der Lageröffnung 47 mit Freistellungen 59, 60, 61, 62 und 63 für den Kopfträger 37, und zwar für dessen Trägerscheibe 38, versehen, so daß der Kopfträger 37 mit seiner Trägerscheibe 38 nur an vorgegebenen Lagerstellen in der Lageröffnung 47 im Querschnitt der Lageröffnung gesehen punktförmig anliegt, worauf nachfolgend noch näher eingegangen wird. Zur Begrenzung der axialen Bewegbarkeit des Kopfträgers 37 wirkt mit dessen Trägerscheibe 38 eine von der Trägerplatte 23 abstehende Leiste 64 zusammen.

Der Kopfträger 37 weist an der von dem Magnetkopf 28 abgewandten Seitenfläche 65 der Trägerscheibe 38 einen zu derselben koaxialen, mit derselben einstückig verbundenen ersten Positionierzylinder 66 auf. Mit diesem ersten Positionierzylinder 66 ist ein zu demselben koaxiales Zahnrad 67 einstückig verbunden. Mit dem Zahnrad 67 ist ein zu demselben koaxialer zweiter Positionierzylinder 68 kleineren Durchmessers einstückig verbunden. Durch die Trägerscheibe 38, den ersten Positionierzylinder 66, das Zahnrad 67 und den zweiten Positionierzylinder 68 führt eine Bohrung 69 hindurch, die sich in der Trägerscheibe 38 zum Magnetkopf 28 hin kegelförmig erweitert. Die Bohrung 69 bildet einen Kanal, durch den hindurch elektrische Leitungen zu dem Magnetkopf 28 hindurchgeführt sind, worauf nachfolgend noch näher eingegangen wird.

Wie erwähnt, ist der Magnetkopf 28 um 180° zwischen zwei Abtastpositionen wendbar. Dementsprechend ist der Kopfträger 37 ebenfalls um 180° zwischen zwei Betriebslagen verdrehbar. Diese beiden Betriebslagen sind mit Hilfe von zwei im Gerät vorgesehenen justierbaren Positionierschrauben 70 und 71 festgelegt, an deren freien Enden sich je nach der Betriebslage des Kopfträgers 37 ein vom ersten Positionierzylinder 66 in radialer Richtung abstehender Positionierfortsatz 72 abstützt, wie dies für jene Betriebslage des Kopfträgers 37, die der Betriebsart "Normaler Vorlauf" entspricht, in den Figuren 2 und 3 dargestellt ist. Die Positionierschrauben 70 und 71 sind je in einen plattenförmigen Fortsatz 73 bzw. 74 des Lagerteiles 48 eingeschraubt. Die beiden Fortsätze 73 und 74 stehen von dem Lagerteil 48 an dessen von dem Magentkopf 28 abgewandter Seitenfläche 75 in Richtung der Wendeachse 31 ab.

Zum Wenden des Magnetkopfes 28 und des Kopfträgers 37 weist das Gerät 1 eine Verstelleinrichtung 76 für den Kopfträger 37 auf, die in Fig.1 dargestellt ist. Die Verstelleinrichtung 76 weist ein auf nicht dargestellte Weise motorisch in entgegengesetzten Drehrichtungen antreibbares Zahnrad 77 auf. Das Zahnrad 77 kämmt mit einer am Chassis 10 in ihrer Längsrichtung verschiebbar geführten Zahnstange 78, die zwischen zwei schematisch angedeuteten Begrenzungsanschlägen 79 und 80 hin und her verschiebbar ist. Auf einen von der Zahnstange 78 abstehenden Zapfen 81 ist eine Schenkelfeder 82 aufgesetzt, zwischen deren zwei Schenkel 83 und 84 ein von der Zahnstange 78 abstehender Stift 85 ragt, wodurch die Schenkelfeder 82 positioniert wird. Die beiden Schenkel 83 und 84 der Schenkelfeder 82 sind bestrebt, sich aufeinander zu zu bewegen. Weiters ragt zwischen die beiden Schenkel 83 und 84 der Schenkelfeder 82 ein weiterer Stift 86, der mit einer auf der Trägerplatte 23 in ihrer Längsrichtung verschiebbar geführten Zahnstange 87 verbunden ist. Die Zahnstange 87 steht in Eingriff mit dem Zahnrad 67 des Kopfträgers 37.

Das Wenden das Magnetkopfes 28 ist in bekannter Weise nur dann möglich, wenn der Magnetkopf 28 aus der in Fig.1 dargestellten Abtastposition in Richtung des Pfeiles 88 so weit verstellt ist, daß derselbe aus der Kassette 2 herausgezogen ist. Diese Verstellung des Magnetkopfes 28 wird durch Verstellen der Trägerplatte 23 in Richtung des Pfeiles 88 erreicht, wie dies für einen Teil der Trägerplatte 23 und das den Stift 86 tragende Ende der Zahnstange 87 in Fig.1 mit strichpunktierten Linien angedeutet ist. Wie aus dieser strichpunktierten Darstellung ersichtlich ist, liegt auch bei verstellter Trägerplatte 23 der Stift 86 zwischen den beiden Schenkeln 83 und 84 der Schenkelfeder 82, so daß bei verstellter Trägerplatte 23 eine Kraftübertragung vom motorisch angetriebenen Zahnrad 77 und der Zahnstange 78 über die Schenkelfeder 82 auf den Stift 86 und folglich die Zahnstange 87, das Zahnrad 67 und den Kopfträger 37 gewährleistet ist. Vor dem Wenden des Magnetkopfes 28 wird daher die Trägerplatte 23 in Richtung des Pfeiles 88 verstellt und nach erfolgtem Wenden des Magnetkopfes 28 wird die Trägerplatte 23 entgegen der Richtung des Pfeiles 88 zurückverstellt. Wie diese Verstellung der Trägerplatte 23 erfolgt, ist für die vorliegende Erfindung nicht wesentlich und daher nicht dargestellt.

Zum zusätzlichen Positionieren des Kopfträgers 37 in seinen beiden Betriebslagen ist derselbe mit dem ersten koaxialen Positionierzylinder 66 und dem zweiten koaxialen Positionierzylinder 68 einstückig verbunden. Zum Zusammenwirken mit dem ersten Positionierzylinder 66 sind zwei senkrecht zu den beiden Bandlaufrichtungen 26 und 27 verlaufende, im Querschnitt etwa halbkreisförmig ausgebildete Positionierrippen 89 und 90 vorgesehen. Jede der beiden Positionierrippen 89 und 90 ist an einem von zwei von den plattenförmigen Fortsätzen 73 und 74 des Lagerteiles 48 in Richtung zu der Trägerplatte 23 hin abstehenden Blöcken 91 und 92 vorgesehen. Der zweite koaxiale Positionierzylinder 68 ragt durch einen langlochförmigen Durchbruch 93, der in einer von der Trägerplatte 23 senkrecht abstehenden Positionierplatte 94 vorgesehen ist.

Im folgenden ist das Wenden des Magnetkopfes 28 beschrieben. Es wird davon ausgegangen, daß der Magnetkopf 28 jene Abtastposition einnimmt, die in den Figuren 1 bis 3 nicht dargestellt ist und in der seine beiden Arbeitsspalte 32 den Spurbereich 34 abtasten, wobei sich dann die Zahnstange 78 in der in Figure 1 mit einer strichpunktierten Linie angedeuteten Lage befindet, in der sie sich am Begrenzungsanschlag 80 abstützt. Zuerst wird die Trägerplatte 23 in Richtung des Pfeiles 88 verschoben, so daß der Magnetkopf 28 aus der Kassette 2 herausgezogen wird. Danach wird das Zahnrad 77 gemäß Fig.1 im Uhrzeigersinn angetrieben, wodurch die Zahnstange 78 in ihre in Fig.1 mit vollen Linien dargestellte Position verschoben wird, in der sie sich am Begrenzungsanschlag 79 abstützt. Dabei wird über die Schenkelfeder 82, und zwar über ihren Schenkel 84, unter Spannen der Schenkelfeder 82 der Stift 86 verstellt, so daß die Zahnstange 87 in Richtung des Pfeiles 95 verschoben wird. Hiedurch wird das Zahnrad 67 gemäß Fig.3 entgegen dem Uhrzeigersinn verdreht. Auf diese Weise wird auch der Kopfträger 37 entgegen dem Uhrzeigersinn verdreht, und zwar so lange, bis der Positionierfortsatz 72 sich am freien Ende der Positionierschraube 71 abstützt. Wenn dies der Fall ist, hat der Kopfträger 37 seine Betriebslage erreicht, in der dann der Magnetkopf 28 jene Abtastposition einnimmt, in der er mittels seiner beiden Arbeitsspalte 32 den Spurbereich 33 abtasten kann. Danach wird die Trägerplatte 23 entgegen der Richtung des Pfeiles 88 zurückverstellt, wobei dann der Magnetkopf 28 wieder in die Kassette 2 eintaucht und mit dem Magnetband 3 in Abtastverbindung tritt. Diese Betriebssituation ist in den Figuren 1 bis 3 dargestellt.

In der in den Figuren 1 bis 3 dargestellten Betriebssituation übt die an der Zahnstange 78 abgestützte Schenkelfeder 82 mit ihrem Schenkel 84 über den Stift 86 auf die Zahnstange 87 stets eine Kraft aus, die die Zahnstange 87 in Richtung des Pfeiles 95 belastet. Die Schenkelfeder 82 bildet somit eine Belastungseinrichtung, die die Zahnstange 87 bei der vorliegenden Betriebslage des Kopfträgers 37 stets in Richtung des Pfeiles 95 belastet. Durch diese Belastung mit der Schenkelfeder 82 wird von der Zahnstange 87 auf das Zahnrad 67 stets eine Kraft ausgeübt. Durch diese Kraft wird der Positionierfortsatz 72 gegen das freie Ende der Positionierschraube 71 gedrückt. Weiters wird durch diese Kraft der erste Positionierzylinder 66 gegen die Positionierrippe 89 am Block 91 gedrückt. Weiters wird durch diese Kraft der zweite Positionierzylinder 68 gegen die der Trägerplatte 23 zugewandte Begrenzungswand 96 des Durchbruches 93 in der Positionierplatte 94 gedrückt. Durch das von der Zahnstange 87 her bewirkte Andrücken des Positionierfortsatzes 72 an das freie Ende der Positionierschraube 71 entsteht ein auf den Kopfträger 37 einwirkendes Drehmoment, durch das die Trägerscheibe 38 des Kopfträgers 37 mit ihrer Lagerfläche 39 gegen die an der Trägerplatte 23 ausgebildete Begrenzungswand 58 der Lageröffnung 47 gedrückt wird, wobei die Trägerscheibe 38 des Kopfträgers 37 und die Begrenzungswand 58 der Lageröffnung 47 der Lagereinrichtung 46 an einer Lagerstelle 97 aneinander liegen, die im Querschnitt der Lageröffnung 47 gesehen punktförmig ausgebildet ist. Durch das von der Zahnstange 87 her bewirkte Andrücken des ersten Positionierzylinders 66 an die Positionierrippe 89 am Block 91 entsteht ein weiteres auf den Kopfträger 37 einwirkendes Drehmoment, durch das die Trägerscheibe 38 des Kopfträgers 37 mit ihrer Lagerfläche 39 gegen die Begrenzungswand 55 der Lagerrippe 53 gedrückt wird, wobei die Trägerscheibe 38 des Kopfträgers 37 und die Begrenzungswand 55 der Lagerrippe 53 an einer Lagerstelle 98 aneinander liegen, die im Querschnitt der Lageröffnung 47 gesehen ebenfalls punktförmig ausgebildet ist.

Auf die vorstehend beschriebene Weise ist der Kopfträger 37 exakt in seiner Betriebslage positioniert. In dieser Betriebslage wird der Kopfträger 37 mit der Lagerfläche 39 seiner Trägerscheibe 38 ausschließlich gegen die beiden vorgegebenen Lagerstellen 97 und 98 gedrückt. Da der Kopfträger 37 jedesmal, wenn er in diese Betriebslage verdreht wird, an den beiden vorgegebenen, im Querschnitt punktförmigen Lagerstellen 97 und 98 anliegt, ist gewährleistet, daß der Kopfträger 37 auf eindeutig reproduzierbare Weise in stets dieselbe durch die beiden vorgegebenen Lagerstellen 97 und 98 festgelegte Betriebslage gebracht wird. Hiedurch ist erreicht, daß der von dem Kopfträger 37 getragene Magnetkopf 28 auf eindeutig reproduzierbare Weise in stets dieselbe Abtastposition gebracht wird, so daß stets gleichbleibend gute Abtastverhältnisse durch den Magnetkopf 28 gewährleistet sind.

Wie aus den Figuren 2 und 3 ersichtlich ist, läuft das Magnetband 3 in der dargestellten Betriebslage des Kopfträgers 37 in der Bandlaufrichtung 26 über den Magnetkopf 28. Dabei übt das Magnetband 3 auf den Magnetkopf 28 eine Reibkraft aus. Diese Reibkraft verläuft in der Bandlaufrichtung 26 und hat über den Magnetkopf 28 ein auf den Kopfträger 37 einwirkendes Drehmoment zur Folge, welches das von der Schenkelfeder 82 her bewirkte Andrücken des Kopfträgers 37 mit seiner Trägerscheibe 38 an die Lagerstelle 98 in der Lageröffnung 47 unterstützt. Hiedurch ist gewährleistet, daß der Magnetkopf 28 auch bei einer hohen aus den Magnetkopf 28 einwirkenden Reibkraft stets sicher in seiner Abtastposition verbleibt.

In der zu der vorstehend beschriebenen, in den Figuren 1 bis 3 dargestellten Betriebslage gewendeten, nicht dargestellten Betriebslage des Kopfträgers 37 übt die als Belastungseinrichtung vorgesehene Schenkelfeder 82 auf die Zahnstange 87 stets eine Kraft entgegen der Richtung des Pfeiles 95 aus. Dadurch wird von der Zahnstange 87 auf das Zahnrad 67 des Kopfträgers 37 stets eine Kraft ausgeübt, durch die der Positionierfortsatz 72 gegen das freie Ende der anderen Positionierschraube 70, der erste Positionierzylinder 66 gegen die andere Positionierrippe 90 am Block 92 und der zweite Positionierzylinder 68 wieder gegen die Begrenzungswand 96 des Durchbruches 93 in der Positionierplatte 94 gedrückt wird. Weiters wird dabei die Trägerscheibe 38 des Kopfträgers 37 gegen die Begrenzungswand 58 der Lageröffnung 47 und gegen die Begrenzungswand 54 der anderen Lagerrippe 52 in der Lageröffnung 47 gedrückt, wobei dann die Trägerscheibe 38 des Kopfträgers 37 wieder ausschließlich an zwei vorgegebenen, im Querschnitt punktförmigen Lagerstellen an der Lagereinrichtung 46, nämlich an der Lagerstelle 97 und an einer weiteren Lagerstelle 99 an der Begrenzungswand 54 der Lagerrippe 52, anliegt, so daß auch in dieser Betriebslage des Kopfträgers 37 der Magnetkopf 28 stets dieselbe Abtastposition einnimmt und daher stets gleichbleibend gute Abtastverhältnisse durch den Magnetkopf 28 gewährleistet sind.

Wie bereits erwähnt, weist der Magnetkopf 28 zwei Magnetsysteme auf, die mittels ihrer Arbeitsspalte 32 je Spurbereich 33 bzw. 34 zwei nebeneinanderliegende Spuren abtasten. Jedes dieser beiden Magnetsysteme weist eine in Fig.2 schematisch dargestellte Spule 100 bzw. 101 auf. Ein Ende der einen Spule 100 ist mit einem durch einen Lötstift gebildeten Anschluß 102 des Magnetkopfes 28 elektrisch verbunden. Ein Ende der anderen Spule 101 ist mit einem weiteren durch einen Lötstift gebildeten Anschluß 103 des Magnetkopfes 28 elektrisch verbunden. Die anderen Enden der beiden Spulen 100 und 101 sind miteinander und mit dem Gehäuse 29 des Magnetkopfes 28 und mit einem weiteren durch einen Lötstift gebildeten Anschluß 104 des Magentkopfes 28 elektrisch verbunden. Die beiden Anschlüsse 102 und 103 des Magnetkopfes 28 sind je mit einer Signalleitung 105 bzw. 106 eines Kabels 107 und der Anschluß 104 des Magnetkopfes 28 ist mit einer Bezugspotentialleitung 108 des Kabels 107 verbunden. Das Kabel 107 ist an sich mit einer Abschirmung 109 gegen elektromagnetische Störstrahlungen abgeschirmt. Vom Magnetkopf 28 weg sind die Leitungen 105, 106 und 108 des Kabels 107 auf ungeschirmte Weise durch den als Bohrung ausgebildeten Kanal 69 hindurchgeführt, da die Abschirmung 109 des Kabels 107 im Bereich des Kanals 69 entfernt ist, dies deshalb, um die leichtgängige Verdrehbarkeit des Kopfträgers 37 durch die relativ hohe Steifigkeit und den relativ hohen Torsionswiderstand des geschirmten Kabels 107 nicht zu behindern. Unmittelbar nach dem Austreten der Leitungen 105, 106 und 108 aus dem Kanal 69 sind dieselben mit der Abschirmung 109 gegen elektromagnetische Störstrahlungen abgeschirmt. Die Abschirmung 109 könnte auch noch geringfügig in den Kanal 69 hineinragen.

Wie Fig.2 weiters zeigt, sind die beiden Signalleitungen 105 und 106 mit einer schematisch dargestellten Signalverarbeitungsschaltung 110 zum Verarbeiten von mit dem Magnetkopf 28 aufzuzeichnenden bzw. zum Verarbeiten von mit dem Magnetkopf 28 wiedergegebenen Signalen verbunden. Die Bezugspotentialleitung 108 des Kabels 107 ist mit einem geräteseitigen Bezugspotentialanschluß 111 elektrisch verbunden. Dabei ist die Abschirmung 109 über eine elektrische Verbindung 112 ebenfalls mit der Bezugspotentialleitung 108 und damit mit dem Bezugspotentialanschluß 111 elektrisch verbunden.

Der aus elektrisch leitendem Kunststoff bestehende Kopfträger 37 ist über die beiden Schrauben 44 und 45 aus Metall, die Stahlplatte 43, das Gehäuse 29 des Magnetkopfes 28 aus Mumetall und den mit dem Gehäuse 29 elektrisch verbundenen Anschluß 104 mit der Bezugspotentialleitung 108 und über diese mit dem geräteseitigen Bezugspotentialanschluß 111 elektrisch verbunden. Auf diese Weise sind über den mit dem Bezugspotentialanschluß 111 elektrisch verbundenen, aus elektrisch leitendem Kunststoff bestehenden Kopfträger 37 auch die an sich im Kanal 69 ungeschirmten Abschnitte der Leitungen 105, 106 und 108 gegen elektromagnetische Störstrahlungen abgeschirmt. Dabei ist einfach die ohnehin zum Magnetkopf 28 hingeführte Bezugspotentialleitung 108 zusätzlich zum elektrischen Verbinden des elektrisch leitend ausgebildeten Kopfträger 37 mit dem Bezugspotentialanschluß 111 ausgenützt, so daß sich eine separate elektrische Verbindung zwischen dem Kopfträger 37 und dem Bezugspotentialanschluß 111 erübrigt.

## Patentansprüche

1. Magnetbandgerät (1) mit einem Magnetkopf (28), der im wesentlichen um 180° zwischen zwei Abtastpositionen wendbar ist, mit einem den Magnetkopf tragenden, mittels einer Lagereinrichtung verdrehbar gelagerten Kopfträger (37), der zum Wenden des Magnetkopfes zwischen zwei Betriebslagen verdrehbar ist und der einen zu dem Magnetkopf führenden Kanal (69) aufweist, durch den hindurch im wesentlichen ungeschirmte Abschnitte von mit Anschlüssen (102, 103, 104) des Magnetkopfes elektrisch verbundenen Leitungen (105, 106, 108) eines außerhalb des Kanals mit einer Abschirmung (109) abgeschirmten Kabels (107) zu dem Magnetkopf hindurchgeführt sind, und der elektrisch leitend ausgebildet ist und elektrisch mit einem geräteseitigen Bezugspotentialanschluß (111) verbunden ist, dadurch gekennzeichnet, daß der Kopfträger aus elektrisch leitendem Kunststoff besteht.

2. Gerät nach Anspruch 1, dadurch gekennzeichnet, daß der Kopfträger aus kohlefaserverstärktem Polyamid besteht.

3. Gerät nach einem der Ansprüche 1 oder 2, dadurch gekennzeichnet, daß der Kopfträger mit einer durch den Kanal zu dem Magnetkopf hindurchgeführten, mit einem geräteseitigen Bezugspotentialanschluß elektrisch verbundenen Bezugspotentialleitung (108) des Kabels elektrisch verbunden ist.

## Claims

1. A magnetic-tape apparatus (1) with a magnetic head (28), which can be turned essentially through 180° between two scanning positions, with a head support (37), which carries the magnetic head, which head support is rotatably mounted by means of a bearing device, so as to be rotatable between two operating positions in order to reverse the magnetic head, and has a duct (69) leading to the magnetic head, essentially non-shielded parts of conductors (105, 106, 108) of a cable (107), which outside the duct is shielded by a shield (109), which conductors are electrically connected to terminals (102, 103, 104) of the magnetic head, being passed to the magnetic head through said duct, which is electrically conductive and is electrically connected to a reference-potential terminal (111) of the apparatus, characterised in that the head support consists of electrically conductive synthetic material.

2. An apparatus as claimed in Claim 1, characterised in that the head support consists of carbon-fibre-reinforced polyamide.

3. An apparatus as claimed in Claim 1 or 2, characterised in that the head support is electrically connected to a reference-potential conductor (108) of the cable, which conductor is led to the magnetic head through the duct and is electrically connected to a reference-potential terminal of the apparatus.

## Revendications

1. Appareil à bande magnétique (1) comportant une tête magnétique (28), qui peut tourner en substance de 180° entre deux positions d'exploration, un porte-tête (37) portant la tête magnétique et monté à rotation à l'aide d'un dispositif de palier, ledit porte-tête pouvant être déplacé par rotation entre deux positions de fonctionnement pour faire tourner la tête magnétique, et présentant un canal (69) menant à la tête magnétique, à travers lequel des sections en substance non blindées de lignes (105, 106, 108), connectées électriquement à des bornes (102, 103, 104) de la tête magnétique, d'un câble blindé (107) à l'extérieur du canal par un blindage (109) sont acheminées à la tête magnétique, et étant conçu sous une forme conductrice de l'électricité et est connecté électriquement à une borne de potentiel de référence (111) côté appareil, caractérisé en ce que le porte-tête est fait d'une matière plastique conductrice de l'électricité.

2. Appareil selon la revendication 1, caractérisé en ce que le porte-tête est fait d'un polyamide renforcé par des fibres de carbone.

3. Appareil selon l'une ou l'autre des revendications 1 et 2, caractérisé en ce que le porte-tête est connecté électriquement à une ligne de potentiel de référence (108) du câble connectée électriquement à une borne de potentiel de référence côté appareil et passant à travers le canal en direction de la tête magnétique.
